# EUROPEAN PATENT APPLICATION

(11) **EP 4 586 334 A1**
(43) Date of publication of application: **16.07.2025**
(21) Application number: 25151061.6
(22) Date of filing: 09.01.2025
(51) Int. Cl.: H01M 4/133, H01M 4/134, H01M 4/36, H01M 4/587, H01M 10/052, H01M 4/48, H01M 4/583, H01M 4/62, H01M 4/38, H01M 4/02

(54) **ANODE FOR SECONDARY BATTERY AND LITHIUM SECONDARY BATTERY INCLUDING THE SAME**

(30) Priority: 11.01.2024 KR 20240004727
(71) Applicant: SK On Co., Ltd., Seoul 03161 (KR)
(72) Inventor: BANG, Sang In, Daejeon 34124 (KR); KIM, Hyo Mi, Daejeon 34124 (KR); KWON, Seong Cho, Daejeon 34124 (KR); KIM, Moon Sung, Daejeon 34124 (KR); RYU, Sang Baek, Daejeon 34124 (KR); PARK, Da Hye, Daejeon 34124 (KR); PARK, Sang Won, Daejeon 34124 (KR); YOOK, Seung Hyun, Daejeon 34124 (KR); JANG, Hwan Ho, Daejeon 34124 (KR); CHUNG, Da Bin, Daejeon 34124 (KR); HAN, Jun Hee, Daejeon 34124 (KR)
(74) Representative: Stolmár & Partner Patentanwälte PartG mbB

(57) **Abstract**

An anode for a secondary battery according to exemplary embodiments of the present disclosure includes: an anode current collector; a first anode active material layer which is disposed on at least one surface of the anode current collector and includes natural graphite and artificial graphite; and a second anode active material layer which is disposed on the first anode active material layer and includes a silicon-based active material, a graphite-based active material and carbon nanotubes. Accordingly, a lithium secondary battery having improved rapid charge/discharge cycle lifespan characteristics may be implemented.

## Description

### [BACKGROUND OF THE INVENTION]

### 1. Field of the Invention

The present disclosure relates to an anode for a secondary battery and a lithium secondary battery including the same.

### 2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-shaped outer case in which the electrode assembly and the electrolyte are housed.

Recently, as subjects, to which the lithium secondary battery is applied, are expanded, development for a lithium secondary battery having a higher capacity and output has been proceeded. For example, a silicon-based active material and a carbon-based active material having a high capacity may be used together as an anode active material.

However, the silicon-based active material has a problem in that it reduce battery lifespan characteristics due to volume expansion and a side reaction with the electrolyte. Accordingly, there is a limit in implementing a high-capacity lithium secondary battery by simply applying the silicon-based active material.

### [SUMMARY OF THE INVENTION]

An object of the present disclosure is to provide an anode for a secondary battery having improved electrochemical characteristics.

Another object of the present disclosure is to provide a lithium secondary battery including the anode having improved electrochemical characteristics.

To achieve the above object, according to an aspect of the present invention, there is provided an anode for a secondary battery, including: an anode current collector; a first anode active material layer which is disposed on at least one surface of the anode current collector and includes natural graphite and artificial graphite; and a second anode active material layer which is disposed on the first anode active material layer and includes a silicon-based active material, a graphite-based active material and carbon nanotubes.

According to exemplary embodiments, the first anode active material layer may not include a conductive material.

According to exemplary embodiments, a ratio of a weight of the artificial graphite to a weight of the natural graphite in the first anode active material layer may be 1.5 to 6.

According to exemplary embodiments, a content of the artificial graphite may be 30% by weight to 85% by weight based on a total weight of the first anode active material layer.

According to exemplary embodiments, a content of the natural graphite may be 10% by weight to 50% by weight based on a total weight of the first anode active material layer.

According to exemplary embodiments, the first anode active material layer may have a density of 1.65 g/cm³ to 1.8 g/cm³.

According to exemplary embodiments, the first anode active material layer may further include a binder or a thickener.

According to exemplary embodiments, the first anode active material layer may be composed of the artificial graphite, the natural graphite, the binder and the thickener.

According to exemplary embodiments, the carbon nanotubes may include at least one selected from the group consisting of single-walled carbon nanotubes (SWCNTs), multi-walled carbon nanotubes (MWCNTs), and thin-walled carbon nanotubes (TWCNTs).

According to exemplary embodiments, a content of the carbon nanotubes may be 0.01% by weight to 5% by weight based on a total weight of the second anode active material layer.

According to exemplary embodiments, the silicon-based active material may include SiOx (0<x<2) or a silicon-carbon composite.

According to exemplary embodiments, a content of the silicon-based active material may be 0.1% by weight to 30% by weight based on a total weight of the second anode active material layer.

According to exemplary embodiments, the graphite-based active material may include natural graphite or artificial graphite.

According to exemplary embodiments, the first anode active material layer and the second anode active material layer may have each independently a thickness of 10 µm to 100 µm.

According to exemplary embodiments, a ratio of a density of the first anode active material layer to a density of the second anode active material layer may be greater than 1 and 2 or less.

According to another aspect of the present invention, there is provided a lithium secondary battery including: the anode according to exemplary embodiments; and a cathode disposed to face the anode.

The anode according to exemplary embodiments includes a first anode active material layer which is adj acent to an anode current collector and includes natural graphite and artificial graphite. In addition, the anode includes a second anode active material layer on the first anode active material layer.

In natural graphite having a low strength, particles may be compressed, such that a conduction pathway length between the artificial graphite and natural graphite particles may be reduced. Thereby, a density of the first anode active material layer may be increased, and a density of the second anode active material layer may be relatively decreased. Accordingly, the density of the second anode active material layer is lowered, such that the cell resistance may be decreased, and a battery with improved rapid charge/discharge lifespan characteristics may be implemented.

The second anode active material layer spaced apart from the anode current collector includes a silicon-based active material and carbon nanotubes. Accordingly, a lithium diffusion rate in the second anode active material layer may be secured, such that a capacity of the battery may be increased without causing a deterioration in the rapid charge/discharge characteristics of the battery.

In some embodiments, the first anode active material layer may not include a conductive material. By not including a separate conductive material, an amount of lithium precipitated on the anode surface after rapid charging of the battery may be reduced.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic cross-sectional view illustrating an anode for a lithium secondary battery according to an exemplary embodiment;
FIG. 2 is a schematic plan view illustrating a lithium secondary battery according to an exemplary embodiment;
FIG. 3 is a schematic cross-sectional view illustrating the lithium secondary battery according to an exemplary embodiment;
FIGS. 4 and 5 are photographs showing the surfaces of anodes separated from the batteries of Example 1 and Comparative Example 2 after repeatedly charging and discharging the batteries, respectively; and
FIGS. 6 and 7 are cross-sectional SEM images of the anodes of Example 1 and Comparative Example 2, respectively.

### [DETAILED DESCRIPTION OF THE INVENTION]

According to exemplary embodiments, an anode for a secondary battery including a multilayer anode active material layer and a lithium secondary battery including the same may be provided.

The anode for a secondary battery according to exemplary embodiments may have improved durability by including an anode active material layer having a multilayer structure.

The lithium secondary battery according to exemplary embodiments may have improved rapid charge/discharge lifespan characteristics.

Hereinafter, preferred embodiments of the present disclosure will be described in detail with reference to the accompanying drawings. However, since the drawings attached to the present disclosure are only given for illustrating one of several preferred embodiments of present disclosure to easily understand the technical spirit of the present disclosure with the above-described invention, it should not be construed as limited to such a description illustrated in the drawings.

An anode for a secondary battery according to exemplary embodiments may include an anode current collector, and a first anode active material layer and a second anode active material layer, which are sequentially disposed from at least one surface of the anode current collector.

According to exemplary embodiments, the anode for a secondary battery may include a first anode active material layer and a second anode active material layer, which are sequentially disposed on one surface of the anode current collector. Alternatively, the anode for a secondary battery may include first anode active material layers and second anode active material layers, which are sequentially disposed on each of both surfaces of the anode current collector.

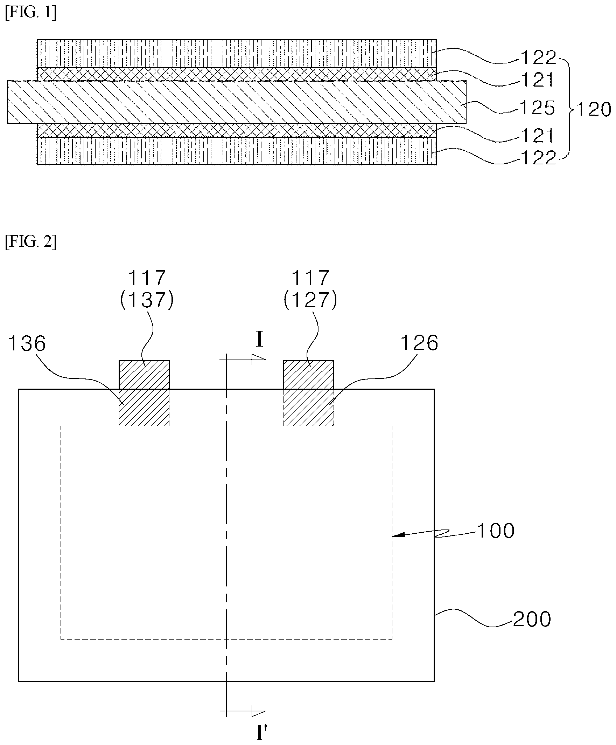

FIG. 1 is a schematic cross-sectional view illustrating an anode for a lithium secondary battery according to an exemplary embodiment.

Referring to FIG. 1, an anode 120 for a secondary battery may include a first anode active material layer 121 and a second anode active material layer 122, which are sequentially disposed on both sides of an anode current collector 125, respectively. The anode for a lithium secondary battery may have a structure of the second anode active material layer 122-first anode active material layer 121-anode current collector 125-first anode active material layer 121-second anode active material layer 122.

In FIG. 1, the first anode active material layer 121 and the second anode active material layer 122 on one side of the anode current collector 125 may be omitted. The anode for a secondary battery may have a structure of the second anode active material layer 122-the first anode active material layer 121-the anode current collector 125.

The anode current collector 125 may include gold, stainless steel, nickel, aluminum, titanium, copper, or an alloy thereof, for example, copper or a copper alloy.

The first anode active material layer 121 may include natural graphite and artificial graphite. A particle strength of the natural graphite may be lower than a particle strength of the artificial graphite. Accordingly, when forming the second anode active material layer 122, the first anode active material layer 121 may be pressed to compress the natural graphite, and the electrode density of the first anode active material layer 121 may be increased. In addition, when the natural graphite is compressed, a length of a conduction pathway between the natural graphite and artificial graphite particles may be decreased, and thereby implementing a lithium secondary battery with improved rapid charge/discharge lifespan characteristics.

According to exemplary embodiments, a content of the artificial graphite may be 30% by weight ("wt%") to 85 wt% based on a total weight of the first anode active material layer. In some embodiments, the content of the artificial graphite may be 40 wt% to 85 wt%, 50 wt% to 80 wt%, or 70 wt% to 80 wt% based on the total weight of the first anode active material layer.

According to exemplary embodiments, the content of the natural graphite may be 10 wt% to 50 wt% based on the total weight of the first anode active material layer. In some embodiments, the content of the natural graphite may be 10 wt% to 45 wt%, 10 wt% to 40 wt%, or 15 wt% to 25 wt% based on the total weight of the first anode active material layer.

Within the above range, output characteristics of an electrode may be improved, and the contents of artificial graphite having high stability and natural graphite having high adhesiveness and particle compressibility may be appropriately maintained to implement a high-energy-density first anode active material layer, and improve the rapid charge/discharge lifespan characteristics of the battery.

According to exemplary embodiments, the content of the artificial graphite may be greater than the content of the natural graphite. In some embodiments, a ratio of the content of the artificial graphite to the content of the natural graphite in the total weight of the first anode active material layer may be 1.5 to 6, 1.8 to 3, or 1.8 to 2.5. Within the above range, a weight-based content ratio of the artificial graphite and the natural graphite may be appropriately maintained to implement a lithium secondary battery having further improved rapid charge/discharge lifespan characteristics.

According to exemplary embodiments, the first anode active material layer may not include a conductive material. The first anode active material layer may have sufficiently high conductivity within the layer even without including a separate conductive material, and reduce an amount of lithium precipitated on the electrode surface compared to the case where the anode active material layer includes the conductive material.

The term "conductive material" may generally refer to an additive added to increase the conductivity of the electrode in the art. For example, the conductive material may refer to a carbon-based conductive material such as carbon black, acetylene black, Ketjen black, graphene, carbon fiber, fluorinated carbon, carbon nanotubes, etc.; a metal-based conductive material such as tin, tin oxide, titanium oxide, or perovskite materials such as LaSrCoO₃, LaSrMnO₃, etc.; an organic-based conductive material such as a polyphenylene derivative, etc.

According to exemplary embodiments, the first anode active material layer may further include a binder and/or a thickener. The binder may be a component that assists in the bonding of the natural graphite and the artificial graphite and the bonding of the first anode active material layer to the anode current collector, and any material may be employed without limitation as long as it is generally used in the art. For example, the binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR), etc. These may be used alone or in combination of two or more thereof.

In addition, the thickener is compatible with the binder, and any material may be employed without limitation as long as it is generally used in the art. For example, the thickener may include a cellulose-based polymer, and examples of the cellulose-based polymer may include carboxymethyl cellulose (CMC), methyl cellulose (MC), etc. These may be used alone or in combination of two or more thereof.

According to exemplary embodiments, the first anode active material layer may be composed of the artificial graphite, the natural graphite, the binder and the thickener. According to some embodiments, the first anode active material layer may not include other components except for the artificial graphite, the natural graphite, the binder and the thickener, and a sum of the contents of the four components in the total weight of the first anode active material layer may be 100 wt%.

According to exemplary embodiments, the first anode active material layer may have a thickness of 10 µm to 100 µm. According to some embodiments, the first anode active material layer may have a thickness of 10 µm to 50 µm, or 20 µm to 40 µm.

According to exemplary embodiments, the first anode active material layer may have a density of 1.65 g/cm³ to 1.8 g/cm³. According to some embodiments, the first anode active material layer may have a density of 1.69 g/cm³ to 1.79 g/cm³. Within the above range, the length of the conduction pathway of the first anode active material layer adj acent to the anode current collector may be shortened, thereby implementing a battery having improved rapid charge/discharge lifespan characteristics.

Referring to FIG. 1 again, the second anode active material layer 122 may include a silicon-based active material, a graphite-based active material and carbon nanotubes. The silicon-based active material may increase a capacity of the electrode, but may decrease a lithium diffusion rate compared to the case where the anode active material layer is composed of only the graphite-based active material. Therefore, the second anode active material layer 122 may include the carbon nanotubes having high dispersibility and conductivity.

According to exemplary embodiments, the silicon-based active material may include SiOₓ (0<x<2), and be doped with metals. For example, the silicon-based active material may include SiOₓ (0<x<2) containing at least one doping metal selected from the group consisting of Mg, Li, N, B, P, Al, Cu, Mn, Ca and Zn.

According to exemplary embodiments, the silicon-based active material may include a silicon-carbon composite. For example, the silicon-carbon composite may include porous carbon-based matrix particles and silicon present inside the pores of the porous carbon-based matrix particles and/or on an outer surface of the particles.

According to exemplary embodiments, a content of the silicon-based active material may be 0.1 wt% to 30 wt% based on a total weight of the second anode active material layer. According to some embodiments, the content of the silicon-based active material may be 5 wt% to 15 wt% based on the total weight of the second anode active material layer. Within the above range, rapid damage to the anode during rapid charging and discharging of the battery may be prevented while increasing the capacity of the anode.

According to exemplary embodiments, the carbon nanotubes may include single-walled carbon nanotubes (SWCNTs), multi-walled carbon nanotubes (MWCNTs), thin-walled carbon nanotubes (TWCNTs) or the like. These may be used alone or in combination of two or more thereof.

The single-walled carbon nanotube may include a structure in which a single graphene sheet forms a tube shape. The multi-walled carbon nanotube may include a structure in which a plurality of graphene sheets form a concentric tube shape. The thin-walled carbon nanotube may have the number of walls, which is greater than that of the single-walled carbon nanotube, but less than that of the multi-walled carbon nanotube.

According to exemplary embodiments, a content of the carbon nanotubes may be 0.01 wt% to 5 wt% based on the total weight of the second anode active material layer. According to some embodiments, the content of the carbon nanotubes may be 0.05 wt% to 2 wt% based on the total weight of the second anode active material layer. Within the above range, the conductivity in the second anode active material layer may be secured, thereby improving the output characteristics of the battery.

According to exemplary embodiments, the graphite-based active material may include natural graphite or artificial graphite. The natural graphite and the artificial graphite may be the same as those included in the first anode active material layer.

According to exemplary embodiments, a content of the graphite-based active material may be 70 wt% to 90 wt% based on the total weight of the second anode active material layer.

According to exemplary embodiments, the second anode active material layer may further include a binder and/or a thickener. The binder and the thickener may be the same as those described for the first anode active material layer.

According to exemplary embodiments, the second anode active material layer may further include a conductive dispersant. The conductive dispersant may be used to improve the dispersibility of carbon nanotubes in the anode slurry.

The conductive dispersant may be a surfactant. For example, the surfactant may include a cationic surfactant, an anionic surfactant, a nonionic surfactant, an amphoteric surfactant, or a mixture thereof.

For example, the anionic surfactant may include a carboxylic acid salt, a sulfonic acid salt, a sulfuric acid ester salt, a phosphoric acid ester salt and the like.

For example, the cationic surfactant may include a simple aliphatic amine salt containing primary to tertiary amines, and so-called onium compounds such as a quaternary ammonium salt, a phosphonium salt, a sulfonium salt and the like.

The amphoteric surfactant may be an amphoteric compound having both one or more cationic functional groups and one or more anionic functional groups. The amphoteric compounds may be a carboxylic acid type, sulfonic acid type, sulfuric acid ester type, phosphoric acid type, phosphoric acid ester type compound, etc. according to the classification by the anion active group of the hydrophilic group. Alternately, the amphoteric compounds may be a betaine-based, imidazoline-based, β-alanine-based, amino-based compound, etc. according to the classification by the chemical structure.

For example, the nonionic surfactant may have an -OH group as a surfactant that does not have a group to be dissociated into ions in an aqueous solution. For example, the nonionic surfactant may include an ether group and/or an ester group.

A ratio of the content of the conductive dispersant to the content of the carbon nanotubes in the total weight of the second anode active material layer may be 1 to 2, or 1.2 to 1.8.

According to exemplary embodiments, the second anode active material layer may further include a conductive material different from the carbon nanotubes. For example, the conductive material may include a carbon-based conductive material such as carbon black, acetylene black, Ketjen black, graphene, carbon fibers, fluorinated carbon, carbon nanotubes, etc.; a metal-based conductive material such as tin, tin oxide, titanium oxide, or perovskite materials such as LaSrCoO₃, LaSrMnO₃, etc.; an organic-based conductive material such as a polyphenylene derivative, etc. These may be used alone or in combination of two or more thereof.

According to exemplary embodiments, the second anode active material layer may have a thickness of 10 µm to 100 µm. According to some embodiments, the second anode active material layer may have a thickness of 10 µm to 50 µm, or 20 µm to 40 µm.

According to exemplary embodiments, the second anode active material layer may have a density of 1.55 g/cm³ to 1.62 g/cm³. Within the above range, the density of the second anode active material layer spaced apart from the anode current collector may be lower than the density of the first anode active material layer, and thus a resistance of the second anode active material layer adjacent to the electrolyte may be reduced, thereby improving the rapid charging characteristics of the battery.

According to exemplary embodiments, a ratio of the density of the first anode active material layer to the density of the second anode active material layer may be greater than 1 and 2 or less. According to some embodiments, the ratio of the density of the first anode active material layer to the density of the second anode active material layer may be 1.03 to 1.5, or 1.04 to 1.16. Within the above range, the battery capacity may be improved through the first anode active material layer, and the battery stability may be enhanced through the second anode active material layer.

According to exemplary embodiments, a ratio of the thickness of the second anode active material layer to the thickness of the first anode active material layer may be 0.5 to 2. According to some embodiments, the ratio of the thickness of the second anode active material layer to the thickness of the first anode active material layer may be 0.7 to 1.5.

According to exemplary embodiments, a lithium secondary battery including the anode for a lithium secondary battery and a cathode disposed to face the anode may be provided.

The lithium secondary battery according to exemplary embodiments of the present disclosure may have reduced cell resistance, improved rapid charging performance, and excellent lifespan characteristics, by including the anode for a lithium secondary battery.

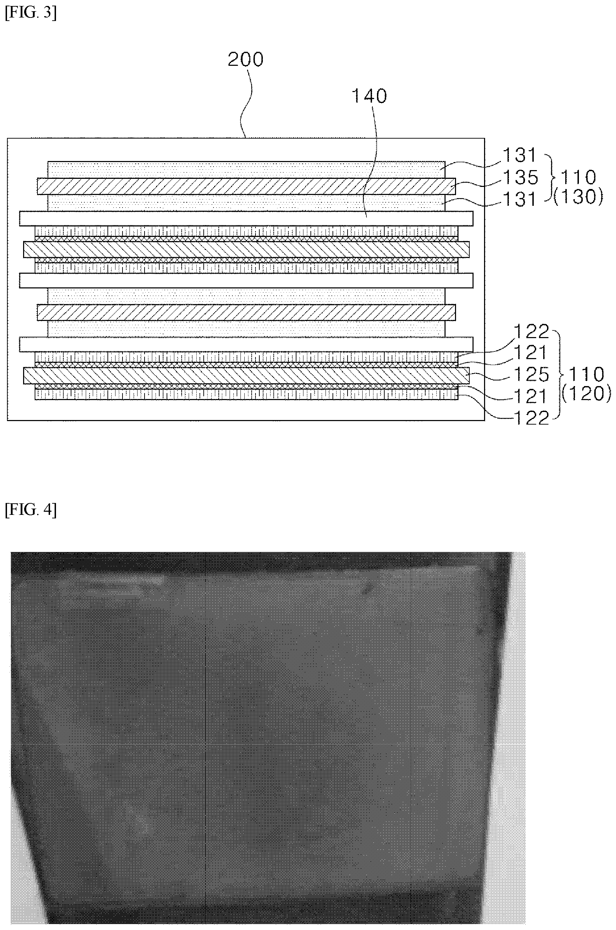

Hereinafter, the lithium secondary battery according to exemplary embodiments will be described in more detail with reference to the drawings. FIG. 2 is a schematic plan view illustrating a lithium secondary battery according to an exemplary embodiment, and FIG. 3 is a cross-sectional view of the lithium secondary battery according to an exemplary embodiment taken on line I-I' of FIG. 2.

Referring to FIGS. 2 and 3, the lithium secondary battery may include the anode 120 and a cathode 130 disposed to face the anode 120.

According to exemplary embodiments, the matters regarding the anode 120 may be the same as those described for the anode for a lithium secondary battery, unless otherwise described.

FIG. 3 illustrates an example in which an anode 120 (see FIG. 1) for a lithium secondary battery according to some embodiments shown in FIG. 1 is introduced.

The cathode 130 may include a cathode current collector 135 and a cathode active material layer 131 on the cathode current collector 135.

For example, the cathode active material layer 131 may include a cathode active material, a cathode binder and a conductive material, as necessary.

For example, the cathode 130 may be prepared by mixing and stirring the cathode active material, the cathode binder, and the conductive material, etc. in a dispersion medium to prepare a cathode slurry, and then applying the cathode slurry to the cathode current collector 135, followed by drying and pressing the same.

For example, the cathode current collector 135 may include stainless steel, nickel, aluminum, titanium, copper, or an alloy thereof.

For example, the cathode active material may include lithium metal oxide particles capable of reversibly intercalating and deintercalating lithium ions.

In one embodiment, the lithium metal oxide particles may contain nickel, cobalt, manganese, aluminum, etc.

In some embodiments, the lithium metal oxide particles may contain nickel, and a content of the nickel in the lithium metal oxide particles may be 80 mol% or more based on a total number of moles of all elements except for lithium and oxygen.

In some embodiments, the lithium metal oxide particles may include LiNiO₂, LiCoO₂, LiMnO₂, LiMn₂O₄, or be represented by the following formula.

[Formula] LiₓNi_{(-a-b)}CoₐM_{b}O_{y}

In the formula, M is at least one of Al, Zr, Ti, Cr, B, Mg, Mn, Ba, Si, Y, W and Sr, and x, y, a and b may satisfy 0.9≤x≤12, 1.9<y<2.1, 0≤a+b≤0.5.

In some embodiments, in the formula, a and b may satisfy 0<a+b≤0.4, 0<a+b≤0.3, 0<a+b≤0.2, or 0<a+b≤0.1.

The cathode binder and the conductive material may be substantially the same as or similar to the above-described anode binder and the conductive material. For example, the cathode binder may be an organic binder such as polyvinylidene fluoride (PVdF).

In one embodiment, a separation membrane 140 may be interposed between the cathode 130 and the anode 120.

In some embodiments, an area of the anode 120 may be larger than an area of the cathode 130. In this case, lithium ions generated from the cathode 130 may smoothly move to the anode 120 without being precipitated in the middle.

According to exemplary embodiments, the lithium secondary battery may include a separation membrane interposed between the anode and the cathode, and an electrolyte.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer or the like. Alternatively, for example, the separation membrane 140 may include a nonwoven fabric made of glass fiber having a high melting point, polyethylene terephthalate fiber or the like.

For example, an electrode cell may be formed including the cathode 130, the anode 120 and the separation membrane 140.

For example, a plurality of electrode cells may be stacked to form an electrode assembly 100.

For example, the electrode assembly 100 may be formed by winding, stacking, z-folding, etc. of the separation membrane 140.

A non-aqueous electrolyte may be used as the electrolyte. The non-aqueous electrolyte includes a lithium salt of an electrolyte and an organic solvent, the lithium salt is expressed by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CR3CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

For example, the above-described electrode assembly 100 and an electrolyte may be housed together in a case 200 to form a lithium secondary battery.

The lithium secondary battery may be manufactured, for example, in a cylindrical shape, a square shape, a pouch type or a coin shape.

The lithium secondary battery according to exemplary embodiments may include an electrode lead 117 connected to an electrode 110 and protruding to an outside of the case 200.

For example, the lithium secondary battery may include a cathode lead 137 connected to the cathode 130 and protruding to the outside of the case 200; and an anode lead 127 connected to the anode 120 and protruding to the outside of the case 200.

For example, the cathode 130 and the cathode lead 137 may be electrically connected. Similarly, the anode 120 and the anode lead 127 may be electrically connected.

For example, the cathode lead 137 may be electrically connected to the cathode current collector 135. In addition, the anode lead 127 may be electrically connected to the anode current collector 125.

The cathode current collector 135 of the cathode 130 and the anode current collector 125 of the anode 120 may include a notching portion, respectively. The notching portion may be provided as, for example, an electrode tab. The notching portion may include a cathode notching portion protruding from the cathode current collector 135 and an anode notching portion protruding from the anode current collector 125.

For example, the cathode current collector 135 may include a protrusion portion (a cathode tab 136) on one side. The cathode active material layer 131 may not be formed on the cathode tab 136. The cathode tab 136 may be integrally formed with the cathode current collector 135, or may be connected thereto by welding, etc. The cathode current collector 135 and the cathode lead 137 may be electrically connected through the cathode tab 136.

Similarly, the anode current collector 125 may include a protrusion portion (an anode tab 126) on one side. The anode active material layer may not be formed on the anode tab 126. The anode tab 126 may be integrally formed with the anode current collector 125, or may be connected thereto by welding, etc. The anode current collector 125 and the anode lead 127 may be electrically connected through the anode tab 126.

In one embodiment, the electrode assembly 100 may include a plurality of cathodes and a plurality of anodes. For example, the plurality of cathodes and the plurality of anodes may be disposed alternately with each other, and the separation membranes may be interposed between the cathodes and the anodes. Accordingly, the lithium secondary battery according to an embodiment of the present disclosure may include a plurality of cathode tabs and a plurality of anode tabs, which protrude from each of the plurality of cathodes and the plurality of anodes.

In one embodiment, the cathode tabs (or the anode tabs) may be stacked, pressed and welded to form a cathode tab stack (or an anode tab stack). The cathode tab stack may be electrically connected to the cathode lead 137. In addition, the anode tab stack may be electrically connected to the anode lead 127.

Hereinafter, examples of the present disclosure will be further described with reference to specific experimental examples. The examples and comparative examples included in the experimental examples are only given for illustrating the present disclosure and do not limit the appended claims.

### Example 1

### (1) Preparation of anode

A first anode slurry was prepared by adding water to a mixture including 68 wt% of artificial graphite (D50: 20 µm), 28.4 wt% of natural graphite, 2.4 wt% of SBR as a binder, and 1.2 wt% of CMC as a thickener.

A second anode slurry was prepared by adding water to a mixture including 12 wt% of silicon-based active material (SiOx, 0<x<2), 85.95 wt% of artificial graphite (D50: 20 µm), 0.1 wt% of SWCNTs as a conductive material, 0.15 wt% of surfactant as a conductive dispersant, 0.6 wt% of SBR as a binder, and 1.2 wt% of CMC as a thickener.

The first anode slurry prepared above was applied to one surface of a copper current collector (a copper foil with a thickness of 8 µm), followed by drying and pressing the same to form a first anode active material layer having a loading amount of 4.3 mg/cm².

The second anode slurry prepared above was applied to the formed first anode active material layer, followed by drying and pressing the same to form a second anode active material layer having a loading amount of 4.3 mg/cm², thus to prepare an anode.

### (2) Manufacturing of a lithium secondary battery

Li[Ni_{0.88}Co_{0.1}Mn_{0.02}]O₂ as a cathode active material, MWCNTs as a conductive material, and polyvinylidene fluoride (PVdF) as a binder were mixed in a weight ratio of 98.08:0.72:1.2 to prepare a cathode slurry. The slurry was uniformly applied to an aluminum foil with a thickness of 12 µm, followed by vacuum drying the same to prepare a cathode for a secondary battery. At this time, about 20 wt% of the MWCNT content was composed of CNT dispersant.

The cathode and the anode were respectively notched in a predetermined size and laminated, then an electrode cell was fabricated by interposing a separator (polyethylene, thickness: 13 µm) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected ("electrolyte injection side"). At this time, a portion having the electrode tab was included in the sealing part.

The electrolyte was injected through the electrolyte injection side, and the electrolyte injection side was sealed, followed by impregnation for 12 hours or more.

The electrolyte used herein was prepared by dissolving 1.1 M LiPF₆ in a mixed solvent of EC/EMC (25/75; volume ratio), and then adding 8 wt% of fluoroethylene carbonate (FEC), 0.5 wt% of 1,3-propene sultone (PRS) and 1.0 wt% of 1,3-propane sultone (PS).

### Example 2

An anode and a lithium secondary battery were manufactured according to the same procedures as described in Example 1, except that 63 wt% of artificial graphite, 33.4 wt% of natural graphite and 0.3 wt% of surfactant were used when preparing the first anode slurry.

### Example 3

An anode and a lithium secondary battery were manufactured according to the same procedures as described in Example 1, except that 85.7 wt% of artificial graphite and 0.2 wt% of SWCNTs were used when preparing the second anode slurry.

### Example 4

An anode and a lithium secondary battery were manufactured according to the same procedures as described in Example 1, except that 10 wt% of silicon-based active material and 87.95 wt% of artificial graphite were used when preparing the second anode slurry.

### Example 5

An anode and a lithium secondary battery were manufactured according to the same procedures as described in Example 1, except that 83 wt% of artificial graphite and 13.4 wt% of natural graphite were used when preparing the first anode slurry.

### Example 6

An anode and a lithium secondary battery were manufactured according to the same procedures as described in Example 1, except that 53 wt% of artificial graphite and 43.4 wt% of natural graphite were used when preparing the first anode slurry.

### Comparative Example 1

An anode and a lithium secondary battery were manufactured according to the same procedures as described in Example 1, except that water was added to a mixture including 68 wt% of artificial graphite (D50: 20 µm), 27.15 wt% of natural graphite, 0.5 wt% of SWCNTs, 0.75 wt% of a conductive dispersant, 2.4 wt% of SBR as a binder, and 1.2 wt% of CMC as a thickener when preparing the first anode slurry.

### Comparative Example 2

An anode and a lithium secondary battery were manufactured according to the same procedures as described in Example 1, except that 96.4 wt% of artificial graphite was used instead of the natural graphite when preparing the first anode slurry.

### Comparative Example 3

An anode and a lithium secondary battery were manufactured according to the same procedures as described in Example 1, except that 96.4 wt% of artificial graphite was used instead of the natural graphite when preparing the first anode slurry.

### Comparative Example 4

An anode and a lithium secondary battery were manufactured according to the same procedures as described in Example 1, except that carbon black was used instead of the SWCNTs when preparing the second anode slurry.

Contents of the components based on the total weight of the solids of the first anode slurry and the second anode slurry prepared in the examples and comparative examples are shown in Table 1 below. The balance of the solids is the binder and thickener as described above, and is not shown in Table 1 below.

**[TABLE 1]**

| | First anode slurry | | | | Second anode slurry | | | |
|---|---|---|---|---|---|---|---|---|
| | Artificial graphite (wt%) | Natural graphite (wt%) | Type/ content of conductive material (wt%) | Conductive dispersant (wt%) | SiOx (0<x<2) (weight %) | Artificial graphite (wt%) | Type/ content of conductive material (wt%) | Conductive dispersant (wt%) |
| Example 1 | 68 | 28.4 | - | - | 12 | 85.95 | SWCNT/ 0.1 | 0.15 |
| Example 2 | 63 | 33.4 | - | - | 12 | 85.95 | SWCNT/ 0.1 | 0.15 |
| Example 3 | 68 | 28.4 | - | - | 12 | 85.7 | SWCNT/ 0.2 | 0.3 |
| Example 4 | 68 | 28.4 | - | - | 10 | 87.95 | SWCNT/ 0.1 | 0.15 |
| Example 5 | 83 | 13.4 | - | - | 12 | 85.95 | SWCNT/ 0.1 | 0.15 |
| Example 6 | 53 | 43.4 | - | - | 12 | 85.95 | SWCNT/ 0.1 | 0.15 |
| Comparative example 1 | 68 | 27.15 | SWCNT 10.5 | 0.75 | 12 | 85.95 | SWCNT/ 0.1 | 0.15 |
| Comparative example 2 | 96.4 | - | - | - | 12 | 85.95 | SWCNT/ 0.1 | 0.15 |
| Comparative example 3 | - | 96.4 | - | - | 12 | 85.95 | SWCNT/ 0.1 | 0.15 |
| Comparative example 4 | 68 | 28.4 | - | - | 12 | 85.95 | Carbon black / 0.1 | 0.15 |

### Experimental Example 1: Observation of electrode surface

A cycle of charging at 25°C in an SOC range of 8 to 80% for 17 minutes and discharging at 0.3C was repeated on the lithium secondary battery samples of the examples and comparative examples 300 times, then the anodes were separated and surfaces thereof were observed.

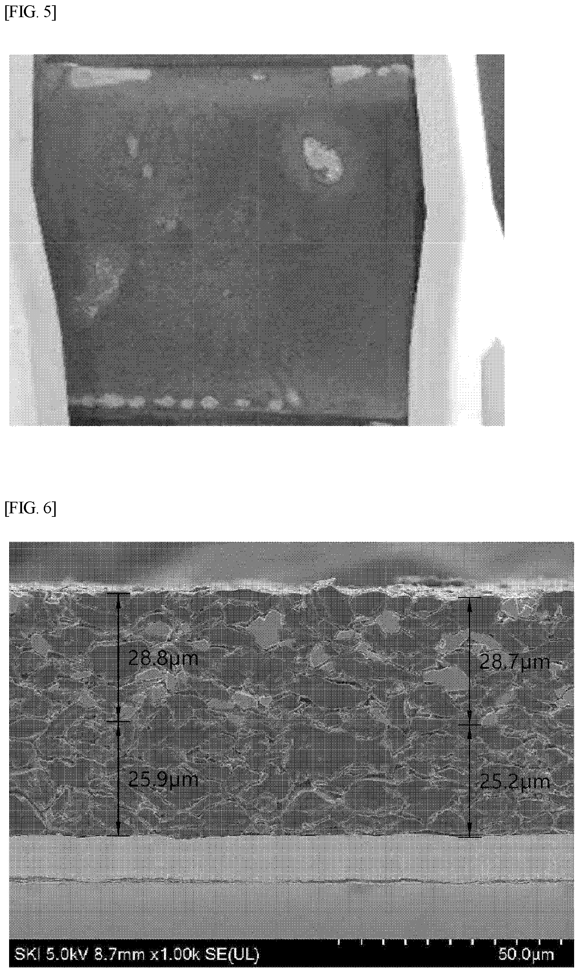

FIGS. 4 and 5 are photographs showing the surfaces of anodes separated from the batteries of Example 1 and Comparative Example 2.

Referring to FIGS. 4 and 5, lithium precipitation was not significantly observed on the surface of the anode of Example 1, but the amount of precipitated lithium was relatively large on the surface of the anode of Comparative Example 2 where the first anode active material layer did not include natural graphite.

### Experimental Example 2: ICP analysis of anode after charging and discharging

A cycle of charging at 25°C in an SOC range of 8 to 80% for 17 minutes and discharging at 0.3C was repeated on the lithium secondary battery samples of the examples and comparative examples 300 times, then the anodes were separated. The active material layer of the separated anode was scraped off, and the amount of lithium was measured using an inductively coupled plasma mass spectrometer (ICP-MS).

Table 2 below shows results of the ICP analysis of the anodes of the examples and comparative examples. The lithium content was expressed in wt% unit based on the total weight of the first anode active material layer and the second anode active material layer.

**[TABLE 2]**

| | Lithium content (wt%) |
|---|---|
| Example 1 | 2.2 |
| Example 2 | 2.5 |
| Example 3 | 3.3 |
| Example 4 | 2.4 |
| Example 5 | 3.7 |
| Example 6 | 4.3 |
| Comparative example 1 | 5.6 |
| Comparative example 2 | 5.2 |
| Comparative example 3 | 4.6 |
| Comparative example 4 | 6.2 |

Referring to Table 2 above, the amount of lithium was detected to be less in the anodes of the examples than in the anodes of the comparative examples. Even if rapid charging and discharging of the battery is repeated, the anodes of the examples have a smaller amount of lithium precipitation, thereby the lifespan characteristics of the battery may be improved.

### Reference Example: Measurement of thickness of electrode active material layer

The anodes prepared in the examples and comparative examples were left for 24 hours then cut, and SEM images of the cut surfaces were captured. From the SEM images, the thicknesses of the first anode active material layer and the second anode active material layer of each anode were measured at two points, and an average value was calculated to determine the thickness.

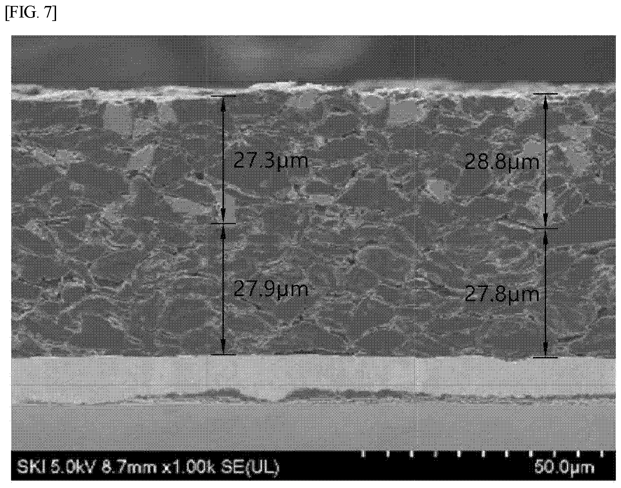

FIGS. 6 and 7 illustrate cross-sectional SEM images of the anodes of Example 1 and Comparative Example 2, respectively.

Table 3 below shows the thickness, density, and ratio of the anode active material layers of each of the examples and comparative examples. Since the first anode active material layer and the second anode active material layer each have a loading of 4.3 mg/cm², the density was calculated by dividing it by the thickness.

**[TABLE 3]**

| | First anode active material layer | | Second anode active material layer | | Second layer thickness/First layer thickness |
|---|---|---|---|---|---|
| | Thickness (µm) | Density (g/cm³) | Thickness (µm) | Density (g/cm³) | |
| Example 1 | 24.49 | 1.76 | 27.51 | 1.56 | 1.12 |
| Example 2 | 24.18 | 1.78 | 27.82 | 1.55 | 1.15 |
| Example 3 | 24.70 | 1.74 | 27.30 | 1.58 | 1.11 |
| Example 4 | 24.86 | 1.73 | 27.14 | 1.58 | 1.09 |
| Example 5 | 25.43 | 1.69 | 26.57 | 1.62 | 1.04 |
| Example 6 | 24.02 | 1.79 | 27.98 | 1.54 | 1.16 |
| Comparative example 1 | 24.39 | 1.76 | 27.61 | 1.56 | 1.13 |
| Comparative example 2 | 25.95 | 1.66 | 26.05 | 1.65 | 1.00 |
| Comparative example 3 | 23.87 | 1.80 | 28.13 | 1.53 | 1.18 |
| Comparative example 4 | 24.65 | 1.74 | 27.35 | 1.57 | 1.11 |

Referring to FIGS. 6 and 7 and Table 3 above, when the anode was prepared by making the loading amount per area of each layer the same, the thickness of the first anode active material layers included in the anodes of the examples was thinner, thereby resulting in a high electrode density. On the other hand, the first anode active material layer of the anode of Comparative Example 2, which did not include natural graphite, was relatively thicker than the first anode active material layer of the examples, and could not be made denser.

### Experimental Example 3: Evaluation of direct current internal resistance (DCIR) after discharging for 10 seconds

The lithium secondary batteries of the examples and comparative examples were charged at 0.3C CC/CV (4.2 V 0.05C CUT-OFF) at 25°C, and then repeatedly subjected to 0.05C CV discharging to measure the discharge capacity of the cell.

Starting from SOC 95%, the batteries were discharged at 0.3C for 5% SOCs up to SOC 5%, and the discharge resistances (DC-IR) were measured at 1C for 10 seconds in each SOC section. The DC-IR values at SOC 50 are shown in Table 4 below.

### Experimental Example 4: Evaluation of rapid charging lifespan characteristics

A cycle of charging at 25°C in an SOC range of 8 to 80% for 17 minutes and discharging at 0.3C was repeated on the lithium secondary battery samples of the examples and comparative examples 300 times. Then, the discharge capacity retention rates were measured in % compared to the initial discharge capacity, and results thereof are shown in Table 4.

### Experimental Example 5: Evaluation of room-temperature (25°C) lifespan characteristics

The lifespan characteristic evaluation was performed on the lithium secondary battery samples of the examples and comparative examples in a range of SOC 4 to 98% at 25°C. The batteries were charged at 0.3C to a voltage corresponding to SOC98% under constant current/constant voltage (CC/CV) conditions, and then cut off at 0.05C. Thereafter, the batteries were discharged at 0.3C to a voltage corresponding to SOC4% under constant current (CC) conditions, and the initial discharge capacity was measured. After repeatedly performing this process for 600 and 1200 cycles, the discharge capacity retention rate compared to the initial discharge capacity was measured as %, and results thereof are shown in Table 4.

**[TABLE 4]**

| | Rapid charge capacity retention rate (%) | Room-temperature capacity retention rate at 600 cycles (%) | Room-temperature capacity retention rate at 1200 cycles (%) | DC-IR (mΩ) |
|---|---|---|---|---|
| Example 1 | 90.10 | 96.30 | 92.20 | 0.93 |
| Example 2 | 89.60 | 95.60 | 91.20 | 0.92 |
| Example 3 | 89.20 | 95.40 | 91.40 | 0.96 |
| Example 4 | 89.60 | 95.80 | 91.70 | 0.94 |
| Example 5 | 89.00 | 95.40 | 91.20 | 0.97 |
| Example 6 | 88.60 | 94.40 | 90.00 | 0.95 |
| Comparative example 1 | 87.90 | 94.10 | 90.10 | 1.00 |
| Comparative example 2 | 88.20 | 94.90 | 90.70 | 1.02 |
| Comparative example 3 | 88.50 | 94.20 | 90.00 | 0.99 |
| Comparative example 4 | 87.50 | 93.70 | 89.80 | 1.05 |

Referring to Table 4 above, it can be confirmed that the lithium secondary batteries of the examples have excellent electrode durability, because the capacity retention rate is high even during rapid charging and discharging.

In addition, it can be confirmed that the lithium secondary batteries of the examples exhibit an improved capacity retention rate than the comparative examples in terms of the room-temperature capacity retention rate at 600 cycles.

The lithium secondary batteries of the examples had a low discharge resistance, such that the battery performance was improved. On the other hand, the lithium secondary batteries of the comparative examples had a higher discharge resistance than the examples, such that the battery performance was deteriorated.

The contents described above are merely an example to which the principles of the present disclosure are applied, and other configurations may be further included in the present disclosure without departing from the scope thereof.

## Claims

1. An anode for a secondary battery, comprising:
an anode current collector (125);
a first anode active material layer (121) which is disposed on at least one surface of the anode current collector and comprises natural graphite and artificial graphite; and
a second anode active material layer (122) which is disposed on the first anode active material layer and comprises a silicon-based active material, a graphite-based active material and carbon nanotubes.

2. The anode for a secondary battery according to claim 1, wherein the first anode active material layer (121) does not include a conductive material.

3. The anode for a secondary battery according to claim 1 or claim 2, wherein a ratio of a weight of the artificial graphite to a weight of the natural graphite in the first anode active material layer (121) is 1.5 to 6.

4. The anode for a secondary battery according to one of claims 1 to 3, wherein a content of the artificial graphite is 30% by weight to 85% by weight based on a total weight of the first anode active material layer (121).

5. The anode for a secondary battery according to one of claims 1 to 4, wherein a content of the natural graphite is 10% by weight to 50% by weight based on a total weight of the first anode active material layer (121).

6. The anode for a secondary battery according to one of claims 1 to 5, wherein the first anode active material layer (121) has a density of 1.65 g/cm³ to 1.8 g/cm³.

7. The anode for a secondary battery according to one of claims 1 to 6, wherein the first anode active material layer (121) further comprises a binder or a thickener.

8. The anode for a secondary battery according to one of claims 1 to 7, wherein the carbon nanotubes comprise at least one selected from the group consisting of single-walled carbon nanotubes (SWCNTs), multi-walled carbon nanotubes (MWCNTs), and thin-walled carbon nanotubes (TWCNTs).

9. The anode for a secondary battery according to one of claims 1 to 8, wherein a content of the carbon nanotubes is 0.01% by weight to 5% by weight based on a total weight of the second anode active material layer (122).

10. The anode for a secondary battery according to one of claims 1 to 9, wherein the silicon-based active material comprise SiOx (0<x<2) or a silicon-carbon composite.

11. The anode for a secondary battery according to one of claims 1 to 10, wherein a content of the silicon-based active material is 0.1% by weight to 30% by weight based on a total weight of the second anode active material layer (122).

12. The anode for a secondary battery according to one of claims 1 to 11, wherein the graphite-based active material comprises natural graphite or artificial graphite.

13. The anode for a secondary battery according to one of claims 1 to 12, wherein the first anode active material layer(121) and the second anode active material layer (122) have each independently a thickness of 10 µm to 100 µm.

14. The anode for a secondary battery according to one of claims 1 to 13, wherein a ratio of a density of the first anode active material layer (121) to a density of the second anode active material layer (122) is greater than 1 and 2 or less.

15. A lithium secondary battery comprising:
the anode according to one of claims 1 to 14; and
a cathode disposed to face the anode.
